(19) Europäisches Patentamt / European Patent Office / Office européen des brevets

(11) **EP 2 506 103 B1**

(12) **FASCICULE DE BREVET EUROPEEN**

(45) Date de publication et mention
de la délivrance du brevet:
**19.10.2016 Bulletin 2016/42**

(51) Int Cl.:
***G05B 23/02*** *(2006.01)*

(21) Numéro de dépôt: **12160913.5**

(22) Date de dépôt: **23.03.2012**

(54) **Procédé et dispositif de détection automatique d'une donnée air erronée sur un aéronef**

Verfahren und Vorrichtung zum automatischen Erkennen von falschen Luftdaten, die auf ein Flugzeug einwirken

Method and device for automatically detecting erroneous air data on an aircraft

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **29.03.2011 FR 1152606**

(43) Date de publication de la demande:
**03.10.2012 Bulletin 2012/40**

(73) Titulaire: **Airbus Opérations SAS
31060 Toulouse (FR)**

(72) Inventeur: **Feau, Julien
31000 TOULOUSE (FR)**

(74) Mandataire: **Gevers & Orès
41 avenue de Friedland
75008 Paris (FR)**

(56) Documents cités:
**FR-A1- 2 725 033**

**Description**

La présente invention concerne un procédé et un dispositif de détection automatique d'une donnée air erronée sur un aéronef, en particulier un avion de transport, lors d'un vol de ce dernier.

La présente invention s'applique à des données air (c'est-à-dire qui sont relatives à l'air) destinées au contrôle de l'aéronef ou de ses moteurs, et notamment aux données ou paramètres suivants :

- des paramètres primaires, qui sont directement mesurés sur l'aéronef à l'aide de moyens usuels : Ps (pression statique), Pt (pression totale) et TAT (température totale); ainsi que
- des paramètres dérivés, qui sont calculés de façon usuelle à l'aide de paramètres primaires : Mn (nombre de Mach), CAS (vitesse air calculée), Alt (altitude pression).

Ces données air sont importantes pour le contrôle de l'aéronef ainsi que pour le contrôle des moteurs, l'utilisation de valeurs erronées par des systèmes embarqués pouvant aboutir à une perte de contrôle de l'aéronef ou des moteurs. Par exemple une vitesse air trop faible, non détectée par un système de contrôle de l'aéronef, peut aboutir à un décrochage de ce dernier si elle est utilisée. Concernant le contrôle d'un moteur, l'utilisation d'une valeur de température erronée peut être à l'origine d'une perte de poussée et/ou d'un pompage (l'extinction du moteur étant alors possible).

De nombreux incidents ont par le passé pu être imputés, directement ou indirectement, à l'utilisation de données air erronées.

Aussi, les systèmes actuels de contrôle de l'aéronef et des moteurs comprennent, en général, des systèmes de sélection de données air qui permettent d'éliminer une donnée erronée. Ces systèmes sont généralement basés sur le traitement des résultats d'une pluralité de sources de mesure redondantes. Ainsi, si l'une d'elles fournit une donnée erronée, qui est détectée grâce à la comparaison avec les données (correctes) des autres sources, cette donnée air et la source correspondantes sont invalidées, c'est-à-dire ne sont plus utilisées dans la suite du vol.

Toutefois, avec cette solution usuelle, il peut exister un problème lorsque plusieurs sources sont affectées par une même cause (comme par exemple un givrage).

Par ailleurs, les systèmes actuels de contrôle de l'aéronef et du moteur comprennent également des logiques spécifiques de détection de givre, basées sur des variations anormales de vitesse ou de température. Toutefois, il n'est pas garanti qu'un cas de givrage ne puisse pas induire des variations de vitesse ou de température hors des seuils prévus par les modèles. Par ailleurs, des cas de pannes autres que le givrage (erreur du calculateur qui transmet la donnée air, corruption des moyens de communication entre systèmes, défaut mécanique ou électrique de la sonde de mesure), peuvent également, théoriquement, affecter la validité d'une donnée air.

Par ailleurs, on connaît, par le document FR - 2 725 033, un procédé et un système de détermination de paramètres anémobaroclinométriques à bord d'un aéronef, à partir de mesures d'un vecteur vitesse air, d'une pression statique et d'une température.

La présente invention a pour objet de remédier aux inconvénients précités. Elle concerne un procédé permettant de détecter, de façon particulièrement fiable et efficace, toute donnée air erronée sur un aéronef lors d'un vol de ce dernier, ce procédé permettant de couvrir notamment l'ensemble des cas mentionnés ci-dessus.

A cet effet, selon l'invention, ledit procédé est remarquable en ce que, de façon automatique et répétitive :

a) on détermine sur l'aéronef un paramètre air courant, à savoir un paramètre de vitesse ou un paramètre de température, comme précisé ci-dessous ;
b) on détermine également sur l'aéronef un paramètre d'altitude pression courant;
c) on vérifie si un point de contrôle courant formé d'un couple de paramètres, à savoir dudit paramètre air courant (paramètre de vitesse ou paramètre de température) et dudit paramètre d'altitude pression courant, est situé à l'intérieur d'une enveloppe caractéristique qui est relative à l'aéronef et qui indique les limites de paramètre air et de paramètre d'altitude pression, à l'intérieur desquelles l'aéronef est susceptible d'évoluer, cette enveloppe caractéristique pouvant être (selon le mode de réalisation) une enveloppe de vol ou une enveloppe environnementale, comme précisé ci-dessous ; et
d) lorsque ledit point de contrôle courant est situé à l'extérieur de ladite enveloppe caractéristique, on émet une information de détection indiquant qu'au moins l'un desdits paramètres (paramètre air courant ou paramètre d'altitude pression courant) formant ledit point de contrôle courant est erroné, ladite donnée air pouvant correspondre à l'un desdits paramètres ou à une donnée permettant de déterminer l'un de ces paramètres. Si à l'étape d) une information de détection est émise, qui indique qu'un paramètre est erroné, on invalide de préférence ce paramètre de sorte qu'il n'est alors plus utilisé au moins tant qu'il reste erroné, généralement au moins jusqu'à la fin du vol en cours.

Ainsi, grâce à l'invention, on surveille automatiquement un paramètre air courant, à savoir un paramètre de vitesse ou un paramètre de température, par rapport à un paramètre d'altitude pression. Lorsque les deux paramètres ne déterminent pas un point à l'intérieur d'une enveloppe caractéristique (pouvant être selon le mode de réalisation une enveloppe de vol ou une enveloppe environnementale, comme précisé ci-dessous), au moins l'un des deux paramètres est considéré comme erroné, car l'aéronef ne pourrait pas se maintenir en vol dans ces conditions.

Ainsi, on est en mesure de détecter, de façon fiable et efficace, la génération d'une donnée air erronée. Cette donnée air peut correspondre à l'un desdits paramètres précités (à savoir un paramètre dérivé) ou à une donnée (ou paramètre primaire) permettant de déterminer l'un de ces paramètres. La présente invention s'applique donc à des données air destinées au contrôle de l'aéronef ou de ses moteurs, et notamment aux données ou paramètres suivants :

- des données (ou paramètres primaires), qui sont directement mesurées sur l'aéronef à l'aide de moyens usuels : Ps (pression statique), Pt (pression totale) et TAT (température totale) ; ainsi que
- des paramètres dérivés, qui sont calculés de façon usuelle à l'aide de paramètres primaires : Mn (nombre de Mach), CAS (vitesse air calculée), Alt (altitude pression).

Le procédé conforme à l'invention permet de couvrir l'ensemble des cas mentionnés ci-dessus, et notamment le cas pour lequel plusieurs sources de données sont affectées par un même problème tel qu'un givrage par exemple.

Selon un mode de réalisation préféré :

- dans une étape préliminaire, on détermine, à partir de ladite enveloppe caractéristique, une liste de limitation qui définit, pour chacune d'une pluralité de valeurs d'un premier desdits paramètres dudit couple, des valeurs limites minimale et maximale pour le second paramètre dudit couple ; et
- à l'étape c), pour chaque point de contrôle courant, on vérifie si le second paramètre courant dudit point de contrôle courant est situé entre les valeurs limites minimale et maximale de ladite liste de limitation, qui sont associées au premier paramètre courant dudit point de contrôle courant.

La génération et l'utilisation d'une telle liste de limitation facilite la mise en oeuvre de la présente invention.

Dans un premier mode de mise en oeuvre, on détermine ledit paramètre air courant et ledit paramètre d'altitude pression courant à l'aide d'informations issues d'une même source d'informations qui mesure sur l'aéronef des données qui sont utilisées pour déterminer lesdits paramètres, et si à l'étape d) une information de détection est émise, elle indique que les deux paramètres sont erronés.

En outre, dans un second mode de mise en oeuvre, on valide tout d'abord l'un desdits deux paramètres courants, qui est considéré comme non erroné, l'autre paramètre étant non validé, et si à l'étape d) une information de détection est émise, elle indique que le paramètre non validé est erroné.

Dans un premier mode de réalisation, ladite enveloppe caractéristique est une enveloppe de vol usuelle de l'aéronef, ledit paramètre air étant un paramètre de vitesse de l'aéronef (nombre de Mach ou une vitesse de type CAS (pour «Calibrated Air Speed» en anglais)). Cette enveloppe de vol qui est caractéristique de l'aéronef considéré indique donc les limites en vitesse air et en altitude pression, à l'intérieur desquelles l'aéronef peut voler en fonction de ses caractéristiques et capacités ou performances propres. L'aéronef n'est pas conçu pour pas se maintenir en vol, au-delà de ces limites.

On connaît généralement deux enveloppes de vol pour un aéronef, à savoir une enveloppe nominale qui définit l'enveloppe opérationnelle normale et une enveloppe périphérique qui définit l'enveloppe extrême de l'aéronef. Dans le cadre de la présente invention, on prend en compte comme enveloppe caractéristique qui est utilisée à l'étape c) du procédé, ladite enveloppe extrême de l'aéronef.

Ce premier mode de réalisation prévoit donc de surveiller un paramètre de vitesse air par rapport à un paramètre d'altitude pression. Lorsque les deux paramètres ne déterminent pas un point à l'intérieur de l'enveloppe de vol, au moins l'un de ces deux paramètres doit être considéré comme erroné, car l'aéronef ne pourrait pas se maintenir en vol dans ces conditions.

Dans un second mode de réalisation, ladite enveloppe caractéristique est une enveloppe environnementale usuelle, qui est définie pour un paramètre air représentant une température (de préférence une température statique). Cette enveloppe environnementale qui est caractéristique de l'aéronef considéré indique donc les limites en température et en altitude pression, à l'intérieur desquelles l'aéronef peut voler en fonction de ses caractéristiques et capacités propres.

En outre, dans ce second mode de réalisation, si ledit paramètre air correspond à une température totale, pour la liste de limitation relative à ladite enveloppe caractéristique, on convertit préalablement les valeurs limites minimales et maximales de température statique en valeurs limites minimales et maximales de température totale, que l'on utilise ensuite à l'étape c). Cette conversion utilise de préférence un nombre de Mach sélectionné, comme précisé ci-dessous.

Ce second mode de réalisation prévoit donc de surveiller un paramètre de température par rapport à une paramètre d'altitude pression, en utilisant une enveloppe environnementale.

La présente invention concerne également un dispositif pour détecter une donnée air erronée sur un aéronef, en particulier un avion de transport, lors d'un vol de ce dernier.

Selon l'invention, ledit dispositif qui est embarqué est remarquable en ce qu'il comporte :

- des premiers moyens pour recevoir un paramètre air courant de l'aéronef ;
- des deuxièmes moyens pour recevoir un paramètre d'altitude pression courant de l'aéronef ;
- des troisièmes moyens pour vérifier si un point de contrôle courant formé d'un couple de paramètres, à savoir dudit paramètre air courant et dudit paramètre d'altitude pression courant, est situé à l'intérieur d'une enveloppe caractéristique qui est relative à l'aéronef et qui indique les limites de paramètre air et de paramètre d'altitude pression, à l'intérieur desquelles l'aéronef est susceptible d'évoluer ; et
- des quatrièmes moyens pour émettre une information de détection indiquant qu'au moins l'un desdits paramètres formant le point de contrôle courant est erroné, lorsque ledit point de contrôle courant est situé à l'extérieur de ladite enveloppe caractéristique.

De préférence, ledit dispositif comporte, de plus, des moyens pour invalider un paramètre qui est considéré comme erroné, de sorte qu'il n'est alors plus utilisé par des systèmes embarqués, au moins tant qu'il reste erroné, généralement au moins jusqu'à la fin du vol en cours.

En outre, dans un mode de réalisation particulier, ledit dispositif comporte, de plus, des moyens pour déterminer sur l'aéronef ledit paramètre air courant, ainsi que des moyens pour déterminer sur l'aéronef ledit paramètre d'altitude pression courant.

Par ailleurs, la présente invention concerne également un système de contrôle pour un aéronef, soit un système usuel qui contrôle le vol de l'aéronef, soit un système usuel qui contrôle au moins un moteur de l'aéronef, ce système étant pourvu d'un dispositif tel que celui spécifié ci-dessus.

La présente invention concerne en outre un aéronef, en particulier un avion de transport, qui comporte un dispositif et/ou un système tels que ceux précités.

Les figures du dessin annexé feront bien comprendre comment l'invention peut être réalisée. Sur ces figures, des références identiques désignent des éléments semblables.

La figure 1 est le schéma synoptique d'un dispositif conforme à l'invention.

Les figures 2 et 3 sont des graphiques représentant respectivement une enveloppe de vol et une enveloppe environnementale, qui sont utilisées pour la mise en oeuvre de la présente invention dans deux modes de réalisation différents.

Le dispositif 1 conforme à l'invention qui est embarqué sur un aéronef (non représenté), en particulier un avion de transport, est destiné à détecter automatiquement une donnée air erronée disponible sur l'aéronef, lors d'un vol de ce dernier.

La présente invention s'applique à des données air (« air data » en anglais), c'est-à-dire à des données relatives à l'air, qui sont destinées au contrôle du vol de l'aéronef ou d'au moins l'un de ses moteurs, et notamment aux données ou paramètres suivants :

- des paramètres primaires, qui sont directement mesurés sur l'aéronef à l'aide de moyens usuels : Ps (pression statique), Pt (pression totale) et TAT (température totale) ; ainsi que
- des paramètres dérivés, qui sont calculés de façon usuelle à l'aide de paramètres primaires : Mn (nombre de Mach), CAS (vitesse corrigée), Alt (altitude pression).

Ces données air sont critiques pour le contrôle de l'aéronef ainsi que pour le contrôle des moteurs, l'utilisation de valeurs erronées par des systèmes embarqués pouvant en effet aboutir à une perte de contrôle de l'aéronef ou des moteurs.

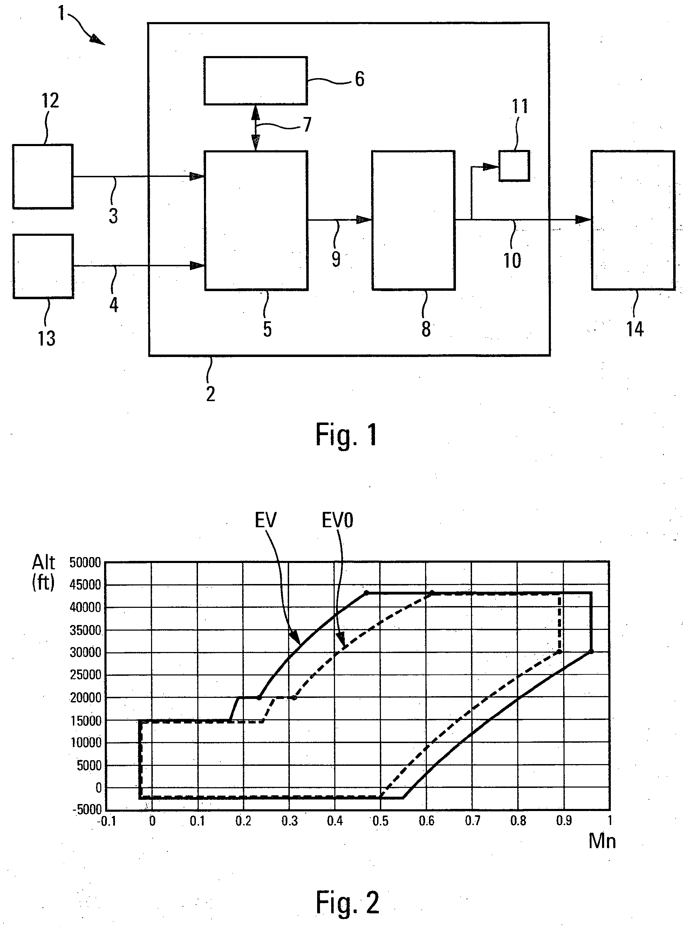

Ledit dispositif 1 comporte, notamment, une unité de traitement 2 représentée sur la figure 1, qui met en oeuvre les traitements automatiques conformes à l'invention permettant de détecter une vitesse erronée.

A cet effet, cette unité 2 comporte :

- des moyens, en particulier des liaisons 3 et 4, permettant de recevoir, de façon automatique et répétitive, respectivement :

  • un paramètre air courant de l'aéronef, à savoir un paramètre de vitesse ou un paramètre de température, comme précisé ci-dessous ; et
  • un paramètre d'altitude pression courant de l'aéronef ;

- des moyens 5 qui sont reliés auxdites liaisons 3 et 4 et qui sont formés de manière à vérifier, de façon automatique et répétitive, si un point de contrôle courant formé dudit couple de paramètres courants, à savoir dudit paramètre air courant et dudit paramètre d'altitude pression courant, est situé à l'intérieur d'une enveloppe caractéristique.

Cette enveloppe caractéristique est relative à l'aéronef et indique les limites de paramètre air et de paramètre d'altitude pression, à l'intérieur desquelles l'aéronef est susceptible d'évoluer. Cette enveloppe caractéristique (qui représente selon le mode de réalisation une enveloppe de vol ou une enveloppe environnementale, comme précisé ci-dessous) peut être enregistrée dans une mémoire usuelle 6, de préférence sous forme d'une liste de limitation précisée ci-après, et être transmise aux moyens 5 par l'intermédiaire d'une liaison 7 ; et

- des moyens 8 qui sont reliés par l'intermédiaire d'une liaison 9 auxdits moyens 5 et qui sont formés de manière à émettre (via une liaison 10) une information de détection indiquant qu'au moins l'un desdits paramètres formant le point de contrôle courant est erroné, lorsque ledit point de contrôle courant est situé à l'extérieur de ladite enveloppe caractéristique.

De préférence, ladite unité 2 comporte, de plus, des moyens 11 pour invalider un paramètre qui est considéré comme erroné, de sorte qu'il n'est alors plus utilisé par des systèmes embarqués (et notamment par le système dans lequel est intégrée l'unité 2), au moins tant qu'il reste erroné, généralement au moins jusqu'à la fin du vol en cours.

Ainsi, le dispositif 1 conforme à l'invention est en mesure de détecter, de façon fiable et efficace, la génération d'une donnée air erronée. Cette donnée air peut correspondre à l'un des paramètres précités, à savoir un paramètre dérivé ou paramètre primaire.

Le dispositif 1 conforme à l'invention permet de couvrir l'ensemble des cas d'erreurs susceptibles d'être rencontrés, et notamment le cas pour lequel plusieurs sources de données sont affectées par un même problème tel qu'un givrage par exemple. Les origines des erreurs (susceptibles d'être détectées) peuvent être diverses :

- un givrage donc ;
- une erreur du calculateur qui transmet la donnée air ;
- une corruption des moyens de communication entre des systèmes embarqués ;
- un défaut mécanique ou électrique de la sonde de mesure de la donnée air, ...

Le principe de l'invention est donc d'utiliser une enveloppe de vol ou une enveloppe environnementale de l'aéronef pour surveiller si une donnée air est erronée ou non.

Dans un mode de réalisation préféré, on détermine, dans une étape préliminaire, à partir de l'enveloppe caractéristique utilisée, une liste de limitation qui définit, pour chacune d'une pluralité de valeurs d'un premier des paramètres du couple considéré, des valeurs limites minimale et maximale pour le second paramètre dudit couple. Cette liste de limitation est enregistrée dans la mémoire 6 qui contient une modélisation de l'enveloppe de vol de l'aéronef. Les moyens 5 vérifient alors, de façon répétitive, pour chaque nouveau point de contrôle courant (c'est-à-dire pour chaque couple), si le second paramètre courant dudit point de contrôle courant est bien- situé entre les valeurs limites minimale et maximale de ladite liste de limitation, qui sont associées au premier paramètre courant dudit point de contrôle courant.

La génération et l'utilisation d'une telle liste de limitation facilite la mise en oeuvre de la présente invention.

Dans un mode de réalisation particulier, ledit dispositif 1 comporte, de plus :

- des moyens 12 (qui sont liés à la liaison 3) pour déterminer (à savoir mesurer et/ou calculer), de façon usuelle, ledit paramètre air courant ; et
- des moyens 13 (qui sont liés à la liaison 4) pour déterminer (mesurer et/ou calculer), de façon usuelle, ledit paramètre d'altitude pression courant.

Ledit dispositif 1 peut comporter, en outre, des moyens auxiliaires 14, par exemple des moyens d'affichage et/ou des moyens d'impression, pour prévenir un opérateur, en particulier un opérateur chargé de la maintenance ou un pilote, lorsqu'une donnée air erronée est détectée.

Dans un mode de réalisation préféré, ledit dispositif 1 (ou de préférence ladite unité 2 du dispositif 1) est directement intégré dans un système de contrôle embarqué qui utilise des données air, soit un système usuel (tel qu'un système de commande de vol) qui contrôle le vol de l'aéronef, soit un système usuel qui contrôle au moins un moteur de l'aéronef. Un tel système présente l'avantage de disposer des paramètres air utilisés dans le traitement de la présente invention. On peut toutefois également envisager que ledit dispositif 1 soit un dispositif indépendant, ou qu'il soit associé à ou intégré dans une source d'informations qui mesure ou détermine une donnée air.

Dans un premier mode de mise en oeuvre, lesdits moyens 12 et 13 déterminent ledit paramètre air courant et ledit paramètre d'altitude pression courant à l'aide d'informations issues d'une même source d'informations qui mesure sur l'aéronef des données qui sont utilisées pour déterminer lesdits paramètres. Dans ce cas, si une information de détection est émise, on considère que les deux paramètres sont erronés.

En outre, dans un second mode de mise en oeuvre, on valide tout d'abord l'un desdits deux paramètres courants, qui est considéré comme non erroné, l'autre paramètre étant non validé. Dans ce cas, si une information de détection est émise, on considère que le paramètre non validé est erroné.

Dans un premier mode de réalisation, ladite enveloppe caractéristique est une enveloppe de vol EV usuelle de l'aéronef, comme représenté sur la figure 2. Dans ce cas, ledit paramètre air est un paramètre de vitesse air de l'aéronef (nombre de Mach ou une vitesse corrigée de type CAS (pour «Calibrated Air Speed» en anglais)). Cette enveloppe de vol qui est caractéristique de l'aéronef considéré indique donc les limites en vitesse air et en altitude pression, à l'intérieur desquelles l'aéronef peut voler en fonction de ses caractéristiques et capacités propres. L'aéronef n'est pas conçu pour se maintenir en vol, au-delà de ces limites.

On connaît généralement deux enveloppes de vol EV et EVO pour un aéronef, à savoir une enveloppe nominale qui définit l'enveloppe opérationnelle normale EVO et une enveloppe périphérique qui définit l'enveloppe extrême EV de l'aéronef. Ces enveloppes de vol EV et EVO sont représentées sur le graphique de la figure 2 respectivement par l'intermédiaire d'un tracé en trait continu et d'un tracé en tirets, qui se chevauchent partiellement et qui définissent donc les limites en nombre de Mach (Mn) et en altitude pression (Alt) exprimée en pieds (ft), à l'intérieur desquelles l'aéronef peut voler en fonction de ses caractéristiques et ses capacités propres. Dans le cadre de la présente invention, on prend en compte comme enveloppe caractéristique, ladite enveloppe extrême EV de l'aéronef.

Ce premier mode de réalisation prévoit donc de surveiller un paramètre de vitesse air par rapport à une paramètre d'altitude pression. Lorsque les deux paramètres ne déterminent pas un point à l'intérieur de l'enveloppe de vol EV, au moins l'un de ces deux paramètres doit être considéré comme erroné, car l'aéronef ne pourrait pas se maintenir en vol dans ces conditions.

Le dispositif 1 est donc en mesure de surveiller individuellement chacune des sources de vitesse air et d'altitude pression pour s'assurer que leur combinaison est effectivement dans l'enveloppe de vol EV. Dans le cas contraire, le dispositif 1 peut invalider la donnée d'altitude pression (ainsi que la donnée de pression statique associée à cette mesure) et/ou la donnée de vitesse air (ainsi que la donnée de pression totale associée à cette mesure et le nombre de Mach).

Il existe plusieurs manières de surveiller un paramètre de vitesse air et un paramètre d'altitude pression.

On peut, par exemple, choisir de surveiller les données de vitesse et d'altitude provenant d'une même source. Un aéronef comporte généralement plusieurs sources (appelées ADIRU1/2/3) de mesure de données air. Chacune de ces sources est connectée à différentes sondes (pitot, sonde de pression statique, sonde de température totale) et transmet ses données aux systèmes de l'aéronef. Si le paramètre de vitesse air et le paramètre d'altitude pression de cette même source ne déterminent pas un point dans l'enveloppe de vol EV, alors le dispositif 1 invalide à la fois les données de vitesse (ainsi que la donnée de pression totale associée à cette mesure et le nombre de Mach) et d'altitude (ainsi que la donnée de pression statique associée à cette mesure) de cette même source.

On peut également choisir de surveiller une donnée de vitesse d'une source particulière par rapport à une donnée d'altitude préalablement validée, notamment sur la base de comparaisons entre toutes les sources. Et inversement, on peut également surveiller une donnée d'altitude d'une source particulière par rapport à une donnée de vitesse préalablement validée, à partir de comparaisons entre toutes les sources. La donnée ayant elle-même été préalablement validée par l'enveloppe de vol et sélectionnée par comparaison avec les autres sources, on peut considérer cette donnée comme une référence valable pour surveiller les données de chacune des sources. Dans ce cas, si une combinaison altitude/vitesse aboutit à un point de contrôle hors de l'enveloppe de vol EV, on invalide seulement la donnée altitude ou vitesse provenant d'une source particulière. Cette solution permet d'identifier la donnée air qui est effectivement erronée.

A titre d'illustration, on a indiqué ci-après une liste de limitation obtenue à partir d'une enveloppe de vol EV relative à un nombre de Mach (Mn) et à une altitude pression (Alt), telle que celle représentée sur la figure 2. Cette liste de limitation définit, pour une pluralité de valeurs d'altitude pression (Alt) exprimées en pieds (ft), des valeurs limites minimale et maximale pour le nombre de Mach (Mn). Cette liste de limitation est présentée en deux parties ci-dessous, relatives respectivement aux valeurs limites minimales (nombre de Mach minimal) et aux valeurs limites maximales (nombre de Mach maximal) du nombre de Mach (Mn).

| Altitude pression (pieds) | Nombre de Mach minimal |
|---|---|
| -2000.0 | 0.548 |
| 0.0 | 0.567 |
| 1000.0 | 0.576 |
| 2000.0 | 0.586 |
| 3000.0 | 0.596 |
| 4000.0 | 0.607 |
| 5000.0 | 0.617 |
| 6000.0 | 0.628 |

(suite)

| Altitude pression (pieds) | Nombre de Mach minimal |
|---|---|
| 7000.0 | 0.639 |
| 8000.0 | 0.65 |
| 9000.0 | 0.661 |
| 10000.0 | 0.673 |
| 11000.0 | 0.685 |
| 12000.0 | 0.697 |
| 13000.0 | 0.709 |
| 14000.0 | 0.722 |
| 15000.0 | 0.735 |
| 16000.0 | 0.748 |
| 17000.0 | 0.761 |
| 18000.0 | 0.775 |
| 19000.0 | 0.789 |
| 20000.0 | 0.804 |
| 21000.0 | 0.819 |
| 22000.0 | 0.834 |
| 23000.0 | 0.849 |
| 24000.0 | 0.865 |
| 25000.0 | 0.881 |
| 29654.3 | 0.96 |
| 43100.0 | 0.96 |
| 44000.0 | 0.96 |
|  |  |
| -2000.0 | -0.025 |
| 14600.0 | -0.025 |
| 14800.0 | 0.169 |
| 15000.0 | 0.17 |
| 16000.0 | 0.173 |
| 17000.0 | 0.177 |
| 18000.0 | 0.18 |
| 19000.0 | 0.184 |
| 20000.0 | 0.189 |
| 20500.0 | 0.236 |
| 21000.0 | 0.241 |
| 22000.0 | 0.247 |
| 23000.0 | 0.253 |
| 24000.0 | 0.26 |
| 25000.0 | 0.267 |

(suite)

| Altitude pression (pieds) | Nombre de Mach minimal |
|---|---|
| 26000.0 | 0.274 |
| 27000.0 | 0.284 |
| 28000.0 | 0.293 |
| 29000.0 | 0.304 |
| 30000.0 | 0.315 |
| 31000.0 | 0.326 |
| 32000.0 | 0.335 |
| 33000.0 | 0.343 |
| 34000.0 | 0.352 |
| 35000.0 | 0.362 |
| 36000.0 | 0.372 |
| 37000.0 | 0.384 |
| 38000.0 | 0.398 |
| 39000.0 | 0.413 |
| 40000.0 | 0.427 |
| 41000.0 | 0.439 |
| 42000.0 | 0.452 |
| 43100.0 | 0.466 |
| 44000.0 | 0.47 |

Ainsi, à titre d'illustration, si les moyens 13 fournissent une valeur d'altitude pression courante par exemple de 17000 pieds, les moyens 5 connaissent les valeurs limites minimale et maximale correspondantes pour le nombre de Mach, à partir de la liste de limitation précédente enregistrée dans la mémoire 6, à savoir 0,177 et 0,761. Les moyens 5 vérifient alors si le nombre de Mach courant (associé à ladite valeur d'altitude pression courante de 17000 pieds) est bien compris entre 0,177 et 0,761, et il déduit de ces comparaisons que ces paramètres courants sont soit erronés, soit valides.

Par ailleurs, dans un second mode de réalisation, ladite enveloppe caractéristique est une enveloppe environnementale EE usuelle qui est définie pour un paramètre air représentant une température. Ce second mode de réalisation prévoit donc de surveiller un paramètre de température par rapport à un paramètre d'altitude pression, en utilisant une enveloppe environnementale EE.

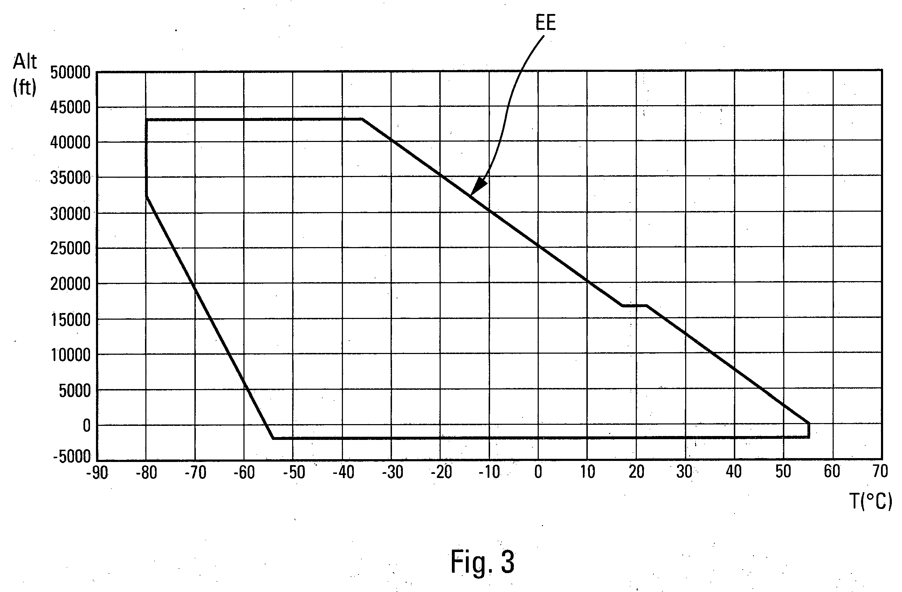

Une telle enveloppe environnementale EE est représentée sur le graphique de la figure 3 par l'intermédiaire d'un tracé en trait continu qui définit les limites en température (T) exprimée en °C et en altitude pression (Alt) exprimée en pieds (ft), à l'intérieur desquelles l'aéronef peut voler en fonction de ses caractéristiques et ses performances propres. L'aéronef n'est pas conçu pour se maintenir en vol, au-delà des limites définies par cette enveloppe de vol EE.

En outre, dans ce second mode de réalisation, si ledit paramètre air surveillé correspond à une température totale TAT et si l'enveloppe environnementale est relative à une température statique SAT, comme pour l'exemple de la figure 3, on convertit les valeurs limites minimales et maximales de température statique SAT (de la liste de limitation relative à ladite enveloppe caractéristique) en valeurs limites minimales et maximales de température totale TAT de manière à obtenir une liste de limitation adaptée qui est ensuite utilisée par les moyens 5. Cette conversion prend en compte de préférence un nombre de Mach sélectionné, utilisé lors du cycle de calcul précédent.

Dans un mode de réalisation préféré, on convertit les valeurs limites de températures statiques (SAT) en valeurs limites de températures totales (TAT), en utilisant le nombre de Mach (Mn) et l'équation suivante :

$$TAT = SAT [1 + 0.2Mn^2].$$

Ce nombre de Mach Mn correspond, de préférence, au nombre de Mach sélectionné par comparaison entre toutes les sources et préalablement validé par l'enveloppe de vol (afin de s'assurer qu'il représente une donnée de référence valable).

Si une donnée de température totale TAT d'une source particulière est détectée en dehors des valeurs limites déterminées par l'altitude pression sélectionnée par comparaison entre toutes les sources (et préalablement validée), alors le dispositif 1 invalide la donnée de température totale TAT de cette source particulière.

La présente invention propose donc d'implémenter au sein de systèmes de l'aéronef, qui sont sensibles aux données de température de l'air (par exemple un système de contrôle de l'aéronef ou un système de contrôle d'un moteur), une modélisation de l'enveloppe environnementale EE, ainsi que les logiques de détection d'une donnée de température totale TAT erronée, indiquées ci-dessus.

**Revendications**

1. Procédé de détection d'au moins une donnée air erronée sur un aéronef lors d'un vol, procédé selon lequel de façon automatique et répétitive :

   a) on détermine sur l'aéronef un paramètre air courant ; et
   b) on détermine sur l'aéronef un paramètre d'altitude pression courant, **caractérisé en ce que** de plus, de façon automatique et répétitive :
   c) on vérifie si un point de contrôle courant formé d'un couple de paramètres, à savoir dudit paramètre air courant et dudit paramètre d'altitude pression courant, est situé à l'intérieur d'une enveloppe caractéristique (EV, EE) qui est relative à l'aéronef et qui indique les limites de paramètre air (Mn, T) et de paramètre d'altitude pression (Alt), à l'intérieur desquelles l'aéronef est susceptible d'évoluer ; et
   d) lorsque ledit point de contrôle courant est situé à l'extérieur de ladite enveloppe caractéristique (EV, EE), on émet une information de détection indiquant qu'au moins l'un desdits paramètres formant ledit point de contrôle courant est erroné, ladite donnée air pouvant correspondre à l'un desdits paramètres ou à une donnée permettant de déterminer au moins l'un de ces paramètres.

2. Procédé selon la revendication 1,
   **caractérisé en ce que** :

   - dans une étape préliminaire, on détermine, à partir de ladite enveloppe caractéristique (EV, EE), une liste de limitation qui définit, pour chacune d'une pluralité de valeurs d'un premier desdits paramètres dudit couple, des valeurs limites minimale et maximale pour le second paramètre dudit couple ; et
   - à l'étape c), pour chaque point de contrôle courant, on vérifie si le second paramètre courant dudit point de contrôle courant est situé entre les valeurs limites minimale et maximale de ladite liste de limitation, qui sont associées au premier paramètre courant dudit point de contrôle courant.

3. Procédé selon l'une des revendications 1 et 2,
   **caractérisé en ce que** l'on détermine ledit paramètre air courant et ledit paramètre d'altitude pression courant à l'aide d'informations issues d'une même source d'informations qui mesure sur l'aéronef des données qui sont utilisées pour déterminer lesdits paramètres, et si à l'étape d) une information de détection est émise, on considère que les deux paramètres sont erronés.

4. Procédé selon l'une des revendications 1 et 2,
   **caractérisé en ce que** l'on valide l'un desdits deux paramètres courants, qui est considéré comme non erroné, l'autre paramètre étant non validé, et si à l'étape d) une information de détection est émise, on considère que le paramètre non validé est erroné.

5. Procédé selon l'une des revendications 1 à 4,
   **caractérisé en ce que** ladite enveloppe caractéristique est une enveloppe de vol (EV) de l'aéronef, ledit paramètre air étant un paramètre de vitesse (Mn) de l'aéronef.

6. Procédé selon l'une des revendications 1 à 4,
   **caractérisé en ce que** ladite enveloppe caractéristique est une enveloppe environnementale (EE), qui est définie pour un paramètre air représentant une température statique (T).

**7.** Procédé selon la revendication 6,
**caractérisé en ce que** ledit paramètre air correspond à une température totale, et pour la liste de limitation relative à ladite enveloppe caractéristique, on convertit des valeurs limites minimales et maximales de température statique en valeurs limites minimales et maximales de température totale, que l'on utilise à l'étape c).

**8.** Procédé selon l'une quelconque des revendications précédentes,
**caractérisé en ce que**, si à l'étape d) une information de détection est émise, qui indique qu'un paramètre est erroné, on invalide ce paramètre.

**9.** Dispositif de détection d'au moins une donnée air erronée sur un aéronef lors d'un vol, ledit dispositif (1) comportant :

- des premiers moyens (3) pour recevoir, de façon automatique et répétitive, un paramètre air courant de l'aéronef ; et
- des deuxièmes moyens (4) pour recevoir, de façon automatique et répétitive, un paramètre d'altitude pression courant de l'aéronef, **caractérisé en ce qu'**il comporte, de plus :
- des troisièmes moyens (5) pour vérifier, de façon automatique et répétitive, si un point de contrôle courant formé d'un couple de paramètres, à savoir dudit paramètre air courant et dudit paramètre d'altitude pression courant, est situé à l'intérieur d'une enveloppe caractéristique (EV, EE) qui est relative à l'aéronef et qui indique les limites de paramètre air et de paramètre d'altitude pression, à l'intérieur desquelles l'aéronef est susceptible d'évoluer ; et
- des quatrièmes moyens (8) pour émettre une information de détection indiquant qu'au moins l'un desdits paramètres formant le point de contrôle courant est erroné, lorsque ledit point de contrôle courant est situé à l'extérieur de ladite enveloppe caractéristique (EV, EE), ladite donnée air pouvant correspondre à l'un desdits paramètres ou à une donnée permettant de déterminer au moins l'un de ces paramètres.

**10.** Dispositif selon la revendication 9,
**caractérisé en ce qu'**il comporte, de plus, des moyens (11) pour invalider un paramètre qui est considéré comme erroné.

**11.** Dispositif selon l'une des revendications 9 et 10,
**caractérisé en ce qu'**il comporte, de plus, des moyens (12) pour déterminer ledit paramètre air courant et des moyens (13) pour déterminer ledit paramètre d'altitude pression courant.

**12.** Système de contrôle pour un aéronef,
**caractérisé en ce qu'**il comporte un dispositif (1) tel que celui spécifié sous l'une des revendications 9 à 11.

**13.** Aéronef,
**caractérisé en ce qu'**il comporte un dispositif (1) tel que celui spécifié sous l'une des revendications 9 à 11.

**Patentansprüche**

**1.** Verfahren zur Detektion von wenigstens einem fehlerhaften Luftwert in einem Luftfahrzeug während eines Fluges, wobei verfahrensgemäß auf automatische und sich wiederholende Weise:

a) stellt man in dem Luftfahrzeug einen momentanen Luftparameter fest; und
b) man stellt in dem Luftfahrzeug einen momentanen Höhendruckparameter fest,

**dadurch gekennzeichnet, dass** darüber hinaus auf automatische und sich wiederholende Weise:

c) man überprüft, ob sich ein momentaner Kontrollpunkt, gebildet aus einem Paar von Parametern, und zwar aus dem momentanen Luftparameter und aus dem momentanen Höhendruckparameter, im Inneren einer charakteristischen Enveloppe (EV, EE) befindet, die sich auf das Luftfahrzeug bezieht und welche die Grenzen des Luftparameters (Mn, T) und des Höhendruckparameters (Alt) anzeigt, innerhalb derer das Luftfahrzeug geeignet ist, sich zu bewegen; und
d) wenn sich der momentane Kontrollpunkt außerhalb der charakteristischen Enveloppe (EV, EE) befindet, gibt man eine Detektionsinformation ab, die anzeigt, dass wenigstens einer der Parameter, die den momentanen Kontrollpunkt bilden, fehlerhaft ist, wobei der Luftwert einem der Parameter oder einem Wert entspricht, welcher es gestattet, wenigstens einen der Parameter zu bestimmen.

2. Verfahren nach Anspruch 1, **dadurch gekennzeichnet, dass**:

- in einem einleitenden Schritt bestimmt man, ausgehend von der charakteristischen Enveloppe (EV, EE) eine Begrenzungsliste, die für jeden von einer Mehrzahl von Werten eines ersten der Parameter des Paares minimale und maximale Grenzwerte für den zweiten Parameter des Paares festlegt; und
- bei dem Schritt c) überprüft man für jeden momentanen Kontrollpunkt, ob sich der momentane zweite Parameter des momentanen Kontrollpunktes zwischen den minimalen und maximalen Grenzwerten der Begrenzungsliste befindet, die mit dem momentanen ersten Parameter des momentanen Kontrollpunktes verknüpft sind.

3. Verfahren nach einem der Ansprüche 1 und 2, **dadurch gekennzeichnet, dass** man den momentanen Luftparameter und den momentanen Höhendruckparameter mit Hilfe von Informationen feststellt, die von derselben Informationsquelle abgegeben werden, die in dem Luftfahrzeug Daten misst, die benutzt werden, um diese Parameter festzustellen, und wenn bei dem Schritt d) eine Detektionsinformation abgegeben wird, nimmt man an, dass die beiden Parameter fehlerhaft sind.

4. Verfahren nach einem der Ansprüche 1 und 2, **dadurch gekennzeichnet, dass** man einen der beiden momentanen Parameter validiert, der als nicht fehlerhaft betrachtet wird, wobei der andere Parameter nicht validiert wird, und wenn bei dem Schritt d) eine Detektionsinformation abgegeben wird, betrachtet man den nicht validierten Parameter als fehlerhaft.

5. Verfahren nach einem der Ansprüche 1 bis 4, **dadurch gekennzeichnet, dass** die charakteristische Enveloppe eine Flug-Enveloppe (EV) des Luftfahrzeuges ist, wobei der Luftparameter ein Geschwindigkeitsparameter (Mn) des Luftfahrzeuges ist.

6. Verfahren nach einem der Ansprüche 1 bis 4, **dadurch gekennzeichnet, dass** die charakteristische Enveloppe eine Umwelt-Enveloppe (EE) ist, die für einen Luftparameter definiert ist, der eine statische Temperatur (T) wiedergibt.

7. Verfahren nach Anspruch 6, **dadurch gekennzeichnet, dass** der Luftparameter einer totalen Temperatur entspricht und für die Begrenzungsliste in Bezug auf die charakteristische Enveloppe, wandelt man die minimalen und maximalen Grenzwerte der statischen Temperatur in minimale und maximale Grenzwerte der totalen Temperatur um, die man in dem Schritt c) benutzt.

8. Verfahren nach einem der vorstehenden Ansprüche, **dadurch gekennzeichnet, dass**, wenn bei dem Schritt d) eine Detektionsinformation abgegeben wird, die anzeigt, dass ein Parameter fehlerhaft ist, wird der Parameter ungültig gemacht.

9. Vorrichtung zur Detektion von wenigstens einem fehlerhaften Luftwert in einem Luftfahrzeug während eines Fluges, wobei die Vorrichtung (1) umfasst:

- erste Mittel (3), um auf automatische und sich wiederholende Weise einen momentanen Luftparameter des Luftfahrzeuges zu empfangen; und
- zweite Mittel (4), um auf automatische und sich wiederholende Weise einen momentanen Höhendruckparameter des Luftfahrzeuges zu empfangen,

**dadurch gekennzeichnet, dass** sie weiterhin umfasst:

- dritte Mittel (5), um auf automatische und sich wiederholende Weise zu überprüfen, ob ein momentaner Kontrollpunkt, der aus einem Paar von Parametern gebildet ist, und zwar aus dem momentanen Luftparameter und aus dem momentanen Höhendruckparameter, sich im Inneren einer charakteristischen Enveloppe (EV, EE) befindet, die sich auf das Luftfahrzeug bezieht und welche die Grenzen des Luftparameters und das Höhendruckparameters angibt, innerhalb welcher das Luftfahrzeug geeignet ist, sich zu bewegen; und
- vierte Mittel (8), um eine Detektionsinformation abzugeben, welche anzeigt, dass wenigstens einer der Parameter, welche den momentanen Kontrollpunkt bilden, fehlerhaft ist, wenn sich der momentane Kontrollpunkt außerhalb der charakteristischen Enveloppe (EV, EE) befindet, wobei der Luftwert einem der Parameter oder einem Wert entsprechen kann, welcher es gestattet, wenigstens einen der Parameter zu bestimmen.

**10.** Vorrichtung nach Anspruch 9,
**dadurch gekennzeichnet, dass** sie außerdem Mittel (11) umfasst, um einen Parameter ungültig zu machen, der als fehlerhaft betrachtet wird.

**11.** Vorrichtung nach einem der Ansprüche 9 und 10, **dadurch gekennzeichnet, dass** sie weiterhin Mittel (12) umfasst, um den momentanen Luftparameter festzustellen, und Mittel (13), um den momentanen Höhendruckparameter festzustellen.

**12.** Steuerungssystem für ein Luftfahrzeug, **dadurch gekennzeichnet, dass** es eine Vorrichtung (1) nach einem der Ansprüche 9 bis 11 umfasst.

**13.** Luftfahrzeug, **dadurch gekennzeichnet, dass** es eine Vorrichtung (1) nach einem der Ansprüche 9 bis 11 umfasst.


**Claims**

**1.** A method for detecting at least one erroneous air data on an aircraft during a flight,
wherein, automatically and repeatedly:

   a) a current air parameter is determined on the aircraft;
   b) a current altitude pressure parameter is determined on the aircraft;

**characterised in that**, automatically and repeatedly:

   c) it is checked that a current point of control comprising a couple of parameters, namely said current air parameter and said current altitude pressure parameter, is situated in a characteristic envelope (EV, EE) being relative to the aircraft and indicating air parameter limits (Mn, T) and altitude pressure parameter limits (Alt), limits within which the aircraft is able to evolve; and
   d) when said current point of control is situated outside said characteristic envelope (EV, EE), a detection piece of information is emitted indicating that at least one of said parameters forming said current point of control is erroneous, said air data being able to correspond to one of said parameters or to a data allowing to determine at least one of these parameters.

**2.** The method according to claim 1,
**characterised in that**:

   - at a preliminary step, from said characteristic envelope (EV, EE), a limitation list is determined defining, for each one of a plurality of values of a first one of said parameters in said couple, minimum and maximum limit values for the second parameter in said couple; and
   - at step c), for each current point of control, it is checked that the second current parameter of said current point of control is situated between the minimum and maximum limit values of said limitation list, being associated with the first current parameter of said current point of control.

**3.** The method according to any one of the claims 1 and 2,
**characterised in that** said current air parameter and said current altitude pressure parameter are determined using information coming from one same source of information measuring on the aircraft data to be used for determining said parameters, and if at step d) a detection piece of information is emitted, the two parameters are considered as being erroneous.

**4.** The method according to any one of the claims 1 and 2,
**characterised in that** one of said two current parameters is validated, being considered as not erroneous, the other parameter not being validated, and if at step d) a detection piece of information is emitted, the non validated parameter is considered as erroneous.

**5.** The method according to any one of the claims 1 and 4,
**characterised in that** said characteristic envelope is a flight envelope (EV) of the aircraft, said air parameter being a speed parameter (Mn) of the aircraft.

6. The method according to any one of the claims 1 and 4,
**characterised in that** said characteristic envelope is an environmental envelope (EE), being defined for an air parameter representing a static temperature (T).

7. The method according to claim 6,
**characterised in that** said air parameter corresponds to a total temperature, and for the limitation list relative to said characteristic envelope, minimum and maximum limit values of static temperature are converted into minimum and maximum limit values of total temperature, to be used at step c).

8. The method according to any one of the preceding claims,
**characterised in that**, if at step d) a detection piece of information is emitted, indicating that a parameter is erroneous, this parameter is invalidated.

9. A detection device for at least one erroneous air data on an aircraft during a flight,
said device (1) comprising:

- first means (3) for receiving, automatically and repeatedly, a current air parameter of the aircraft; and
- second means (4) for receiving, automatically and repeatedly, a current altitude pressure parameter of the aircraft;

**characterised in that** it further comprises:

- third means (5) for checking, automatically and repeatedly, if a current point of control comprising a couple of parameters, namely said current air parameter and said current altitude pressure parameter, is situated in a characteristic envelope (EV, EE) being relative to the aircraft and indicating air parameter limits (Mn, T) and altitude pressure parameter limits (Alt), limits within which the aircraft is able to evolve; and
- fourth means (8) for emitting a detection piece of information indicating that at least one of said parameters forming said current point of control is erroneous, when said current point of control is situated outside said characteristic envelope (EV, EE), said air data being able to correspond to one of said parameters or to a data allowing to determine at least one of these parameters.

10. The method according to claim 9,
**characterised in that** it further comprises means (11) for invalidating a parameter being considered as erroneous.

11. The method according to any one of claims 9 and 10,
**characterised in that** it further comprises means (12) for determining said current air parameter and means (13) for determining said current altitude pressure parameter.

12. A control system for an aircraft,
**characterised in that** it comprises a device (1) such as specified in any one of claims 9 to 11.

13. An aircraft,
**characterised in that** it comprises a device (1) such as specified in any one of claims 9 to 11.

EP 2 506 103 B1

Fig. 1

Fig. 2

14

Fig. 3

15

**EP 2 506 103 B1**

**Documents brevets cités dans la description**

- FR 2725033